# FASCICULE DE BREVET EUROPEEN

(11) **EP 1 921 362 B1**
(45) Date de publication et mention de la délivrance du brevet: **28.07.2010**
(21) Numéro de dépôt: 07291240.5
(22) Date de dépôt: 11.10.2007
(51) Int. Cl.: F16L 3/08, F16L 3/237, F16L 3/137

(54) **Collier double de serrage et procédé de montage**
Doppelspannschelle und Montageverfahren
Double clamp collar and assembly method

(30) Priorité: 08.11.2006 FR 0609743
(43) Date de publication de la demande: 14.05.2008
(73) Titulaire: Hellermanntyton, 78190 Trappes (FR)
(72) Inventeur: Rodriguez, Manuel, 94100 Saint-Maur-des-Fosses (FR); Cherdo, Pascal, 78650 Beynes (FR)
(74) Mandataire: Roger, Walter

(56) Documents cités:
- DE-A1- 19 820 651
- US-A1- 2002 071 715

## Description

L'invention concerne un collier double de serrage, destiné en particulier à relier deux pièces l'une à l'autre avec une liberté de rotation, et son procédé de montage.

On connaît des colliers de serrage doubles comprenant des raccords pivotants et permettant d'articuler les deux colliers l'un par rapport à l'autre. Un tel collier est connu de US-A-20020071715. Néanmoins, ces raccords pivotants sont relativement complexes et leur fabrication est coûteuse.

L'invention vise à remédier à ces inconvénients et propose un collier de serrage double, comprenant deux bandes de collier et une partie de corps sur laquelle sont montées les deux bandes de collier, caractérisé en ce que ladite partie de corps comporte trois éléments de surface sensiblement plans et superposés, reliés deux à deux, l'un à un élément de surface adjacent, au moyen d'au moins deux pontets, les éléments de surface recevant deux à deux, l'un avec un élément de surface adjacent, une desdites bandes de collier entre lesdits deux pontets.

Lesdits éléments de surface sont avantageusement des disques identiques.

Les disques sont en outre parallèles et coaxiaux, étant écartés de l'un à un disque adjacent d'une distance légèrement supérieure à l'épaisseur de la bande de collier reçue.

De préférence, au moins l'un desdits disques comporte au moins un bossage élastique (en matériau élastique, par exemple de type caoutchouc ou polyuréthane), formant élément intermédiaire avec la bande de collier entre les surfaces internes de deux disques adjacents, chacun de ces bossages s'appliquant en légère pression contre une bande de collier, à l'effet de la maintenir, en position libre, mais sans gêner son aptitude à tourner entre les deux disques entre lesquels elle est reçue.

Les pontets peuvent être disposés proches ou tangents de la circonférence des disques, étant avantageusement diamétralement opposés sur les disques, deux à deux.

Ces pontets peuvent être alignés deux à deux de bas en haut sur les disques. Ils peuvent avoir une section en coin tournée vers l'intérieur dont les côtés sont découpés pour recevoir chacun un côté de la bande de collier en butée de rotation, et une section formée en arc de cercle vers l'extérieur, de préférence tangente aux disques et donc de rayon égal à celui des disques et de centre sur l'axe des disques.

L'ensemble comporte ainsi une symétrie axiale, suivant l'axe des disques.

Le diamètre des disques et de même l'écartement des pontets sont déterminés en fonction de la largeur de la bande de collier reçue pour que les deux bandes de collier puissent tourner l'une relativement à l'autre d'un angle variable, par exemple d'un angle nul où elles sont alignées à un angle de 90° où elles sont disposées à angle droit, ou un angle plus important.

La partie de corps du collier est avantageusement issue de moulage en une seule pièce en matière synthétique, en matière plastique par exemple, et de même pour les bandes de collier.

Les bandes de collier sont classiques, étant de préférence flexibles. Elles sont formées selon une section rectangulaire régulière et comportent une partie crantée d'extrémité venant en prise dans une tête crantée complémentaire formée à l'autre extrémité de la bande.

Ces bandes de collier peuvent être montées serrées sur des éléments longilignes, notamment (câbles ou tuyaux, par exemple), un élément par bande de collier en général, pour les relier solidairement grâce au collier double de l'invention avec possibilité de rotation l'un par rapport à l'autre, d'un angle variable et de préférence, comme mentionné précédemment, d'un angle nul à 90° d'angle.

L'invention est illustrée ci-après à l'aide d'un exemple de réalisation et en référence aux dessins annexés, sur lesquels :
- La figure 1 est une vue en perspective d'un collier double de serrage selon l'invention,
- La figure 2 est une vue en élévation de la partie de corps du collier de serrage double selon la figure 1,
- La figure 3 est une vue en coupe de la partie de corps selon la ligne III-III de la figure 2,
- La figure 4 est une vue de dessus du collier de serrage, les bandes de colliers étant orientées à angle droit l'une de l'autre, les bandes de collier n'étant pas serrées,
- La figure 5 montre le collier avec les bandes de collier dans le même plan.

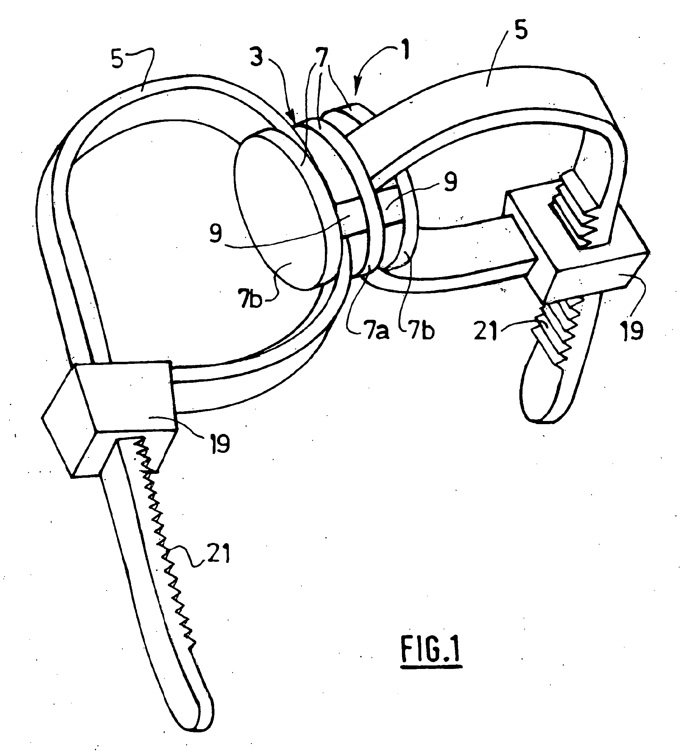

Avec référence à la figure 1, un collier de serrage double 1 selon l'invention comporte une partie de corps 3 et deux bandes de collier 5 montées sur la partie de corps 3.

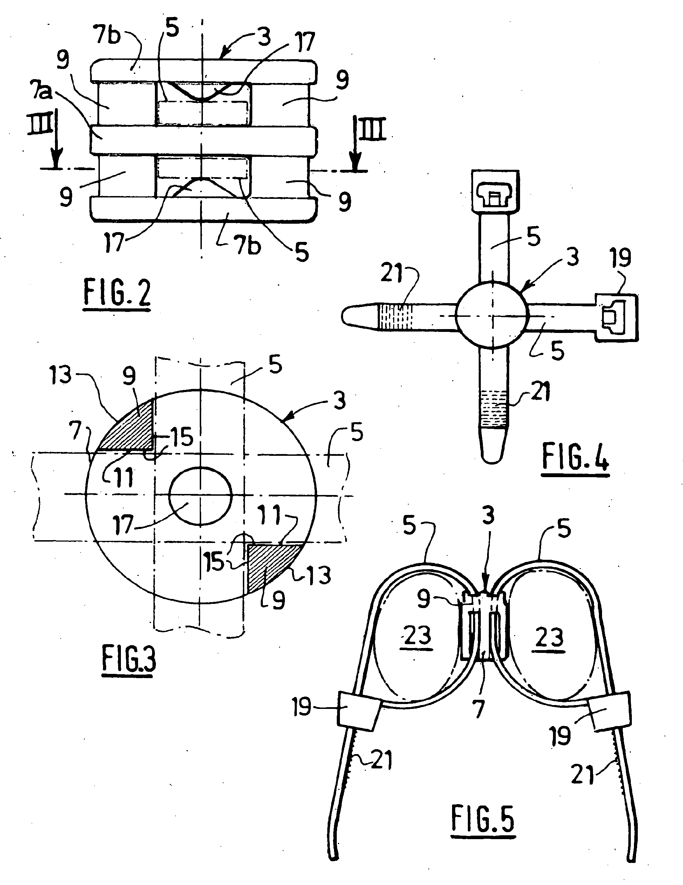

La partie de corps 3, voir aussi les figures 2 et 3, comporte trois disques identiques superposés 7, parallèles et coaxiaux, à savoir un disque central 7a et deux disques extérieurs 7b.

Le disque central 7a est relié à chacun des disques extérieurs 7b au moyen de deux pontets 9 entre lesquels est reçue avec liberté de rotation une bande de collier 5 (représentée en trait mixte). Les disques 7a et 7b sont écartés l'un de l'autre d'une distance légèrement supérieure à l'épaisseur de la bande de collier 5 reçue.

Les quatre pontets 9 sont de configuration identique, étant deux à deux alignés l'un au-dessus de l'autre. Ils sont en outre disposés à la périphérie des disques 7 et diamétralement opposés l'un à l'autre sur chaque disque 7.

Ces pontets 9 ont une section en coin intérieure 11 et une section en forme d'arc externe 13. La section en arc 13 se développe parallèlement à la section en coin 11 et est perpendiculaire au plan des disques 7.

Cette section en arc de cercle 13 est en outre sensiblement tangente à la circonférence des disques 7.

La section en coin 11 comporte deux côtés 15 perpendiculaires l'un à l'autre, étant formée avec symétrie radiale relativement à l'axe des disques 7. Les côtés 15 de cette section sont destinés à recevoir en butée de rotation la bande de collier 5, laquelle est apte à tourner, entre deux disques 7 (adjacents) et entre les deux pontets correspondants 9, selon un angle variable. L'angle maximal de rotation est limité par les positions extrêmes de la bande de collier, à angle droit l'une de l'autre (en trait mixte sur la figure 3) où dans chacune de ces positions la bande de collier 5 se trouve en butée contre les pontets 9.

De plus, les disques externes 7b comportent chacun sur leur surface interne un bossage central 17 sensiblement élastique (en caoutchouc ou polyuréthane par exemple. Les deux bossages 17 sont orientés avec leur sommet l'un vers l'autre et sont destinés à s'appliquer chacun à légère pression contre une bande de collier 5 (en trait mixte sur la figure 2) de façon à la maintenir en position dans son logement.

La partie corps 3 est avantageusement issue de moulage en une seule pièce en matière synthétique, en matière plastique par exemple, et il en est de même pour les bandes de collier.

Les bandes de collier 5 sont identiques. Elles sont flexibles. Elles comportent chacune une tête crantée 19 à l'une de leurs extrémités et une partie crantée correspondante 21 à l'autre extrémité de la bande, la partie crantée 21 étant destinée à s'engager dans la tête crantée cran par cran.

La bande de collier 5 peut ainsi être mise à forme de boucle autour de l'élément à relier 23 (tube ou câble) (figure 5), puis serrée sur celui-ci en tirant sa partie crantée 21 au travers de la tête crantée 19.

Le fonctionnement du collier 1 selon l'invention est à présent décrit.

Il s'agit de passer chacune des bandes de collier 5 autour de chacun des éléments 23 à relier (éventuellement plus qu'un élément), d'enfiler la partie crantée 21 entre le disque central 7a et l'un des disques extérieurs 7b, de la passer entre les deux pontets correspondants 9, d'introduire en prise cette partie crantée 21 dans la tête crantée 19 puis de la tirer jusqu'au niveau de serrage souhaité. Lorsque l'on a terminé le serrage des deux éléments 23 par les deux bandes de collier 5, ceux-ci se trouvent alors reliés l'un à l'autre par le collier de serrage selon l'invention, avec une possibilité de rotation l'un par rapport à l'autre. De plus, le collier de serrage selon l'invention permet de relier l'un à l'autre deux éléments disposés à des angles différents ou non l'un de l'autre.

## Revendications

1. Collier de serrage double (1), comprenant deux bandes de collier (5) et une partie de corps (3), sur laquelle sont montées les deux bandes de collier (5), **caractérisé en ce que** ladite partie de corps (3) comporte trois éléments de surface (7) sensiblement plans et superposés, reliés deux à deux, l'un en regard d'un élément de surface adjacent (7), au moyen d'au moins deux pontets (9), et recevant deux à deux, l'un avec un élément de surface adjacent (7), une desdites bandes de collier (5) entre lesdits deux pontets (9).

2. Collier de serrage double (1) selon la revendication 1, **caractérisé en ce que** lesdits éléments de surface (7) sont des disques identiques (7).

3. Collier de serrage double (1) selon la revendication 2 **caractérisé en ce que** les disques (7) sont parallèles et coaxiaux, étant écartés de l'un à un disque adjacent (7) d'une distance légèrement supérieure à l'épaisseur de la bande de collier (5) reçue.

4. Collier de serrage double (1), selon l'une des revendications 2 et 3, **caractérisé en ce que** au moins l'un desdits disques (5) comportent au moins un bossage (17) élastique s'appliquant en légère pression contre la bande de collier (5).

5. Collier de serrage double (1), selon l'une des revendications 2 à 4, **caractérisé en ce que** les pontets (9) sont disposés proches ou tangents de la circonférence des disques (7).

6. Collier de serrage double (1), selon l'une des revendications 2 à 5, **caractérisé en ce que** les pontets (9) sont diamétralement opposés sur les disques (7).

7. Collier de serrage double (1), selon l'une des revendications 2 à 6, **caractérisé en ce que** les pontets (9) sont alignés deux à deux de bas en haut sur les disques (7).

8. Collier de serrage double (1), selon l'une des revendications 2 à 7, **caractérisé en ce que** les pontets (9) ont une section en coin (11) tournée vers l'intérieur dont les côtés (15) sont découpés pour recevoir chacun un côté de la bande de collier (5) en butée de rotation, et une section formée en arc de cercle (13) vers l'extérieur.

9. Collier de serrage double (1), selon l'une des revendications 2 à 8, **caractérisé en ce que** le diamètre des disques (7) et de même l'écartement des pontets (9) sont déterminés en fonction de la largeur de la bande de collier (5) reçue, en sorte que les deux bandes de collier (5) puissent être tournées l'une relativement à l'autre d'un angle variable.

10. Collier de serrage double (1), selon l'une des revendications précédentes, **caractérisé en ce que** la partie de corps (3) est issue de moulage en une seule pièce en matière synthétique, en matière plastique par exemple, et de même pour les bandes de collier (5).

11. Collier de serrage double (1), selon l'une des revendications précédentes, **caractérisé en ce que** les bandes de collier (5) sont des bandes flexibles, formées selon une section rectangulaire régulière avec une partie crantée (21) d'extrémité de la bande (5) à prise dans une tête crantée (19) complémentaire à l'autre extrémité de la bande (5).

12. Procédé de montage d'un collier double de serrage (1) tel que défini selon l'une des revendications précédentes en vue de relier au moins deux éléments (23) l'un à l'autre, **caractérisé en ce qu'**il comporte les étapes suivantes :
passer chacune des bandes de collier (5) autour d'au moins un élément (23) à relier, enfiler la partie crantée (21) d'une bande de collier (5) entre deux disques adjacents (7) du collier et entre les deux pontets correspondants (9), introduire en prise cette partie crantée (21) dans la tête crantée (19) de la bande de collier (5) et la tirer jusqu'au niveau de serrage souhaité.

## Claims

1. Double clamping collar (1) comprising two collar bands (5) and a body part (3) on which the two collar bands (5) are mounted, **characterized in that** the said body part (3) comprises three substantially flattened superposed surface elements (7) joined together in pairs, one of them facing an adjacent surface element (7), by means of at least two bridges (9) and, in pairs, paired with an adjacent surface element (7), housing one of the said collar bands (5) between the said two bridges (9).

2. Double clamping collar (1) according to Claim 1, **characterized in that** the said surface elements (7) are identical discs (7).

3. Double clamping collar (1) according to Claim 2, **characterized in that** the discs (7) are parallel and coaxial, being separated each from an adjacent disc (7) by a distance slightly greater than the thickness of the collar band (5) housed.

4. Double clamping collar (1) according to one of Claims 2 and 3, **characterized in that** at least one of the said discs (7) comprises at least one elastic boss (17) applying light pressure to the collar band (5).

5. Double clamping collar (1) according to one of Claims 2 to 4, **characterized in that** the bridges (9) are positioned close or tangential to the circumference of the discs (7).

6. Double clamping collar (1) according to one of Claims 2 to 5, **characterized in that** the bridges (9) are diametrically opposed on the discs (7).

7. Double clamping collar (1) according to one of Claims 2 to 6, **characterized in that** the bridges (9) are aligned in pairs from bottom to top on the discs (7).

8. Double clamping collar (1) according to one of Claims 2 to 7, **characterized in that** the bridges (9) have a wedge-shaped section (11) facing towards the inside, the sides (15) of which are cut in such a way that each forms a rotation-preventing end stop for one side of the collar band (5), and have a circular arc-shaped section (13) towards the outside.

9. Double clamping collar (1) according to one of Claims 2 to 8, **characterized in that** the diameter of the discs (7) and likewise the spacing of the bridges (9) are determined according to the width of the collar band (5) housed, so that that the two collar bands (5) can be turned through a variable angle in relation to one another.

10. Double clamping collar (1) according to one of the preceding claims, **characterized in that** the body part (3) is moulded as a single synthetic moulding, made for example of plastic, and the same is true of the collar bands (5).

11. Double clamping collar (1) according to one of the preceding claims, **characterized in that** the collar bands (5) are flexible bands, formed with a uniform rectangular cross section and a toothed part (21) at the end of the band (5) that engages in a complementary toothed head (19) at the other end of the band (5).

12. Method of mounting a double clamping collar (1) as defined in one the preceding claims with a view to connecting at least two elements (23) together, **characterized in that** it comprises the following steps:
passing each of the collar bands (5) around at least one element (23) that is to be connected, slipping the toothed part (21) of one collar band (5) between two adjacent discs (7) of the collar and between the corresponding two bridges (9), engaging this toothed part (21) in the toothed head (19) of the collar band (5) and pulling it until the desired level of tightness is achieved.

## Patentansprüche

1. Doppelschelle(1), die zwei Schellenbänder (5) und einen Körperteil (3) aufweist, an dem die zwei Schellenbänder (5) befestigt sind, **dadurch gekennzeichnet, dass** der Körperteil (3) drei Elemente (7) mit im Wesentlichen ebener Oberfläche aufweist, die übereinander liegen und paarweise, das eine mit Bezug auf ein benachbartes Oberflächenelement (7), mittels mindestens zwei Brücken (9) verbunden sind und die paarweise, das eine mit einem benachbarten Oberflächenelement (7), eines der Schellenbänder (5) zwischen den zwei Brücken (9) aufnehmen.

2. Doppelschelle (1) gemäß Anspruch 1, **dadurch gekennzeichnet, dass** die Oberflächenelemente (7) identische Scheiben (7) sind.

3. Doppelschelle (1) gemäß Anspruch 2, **dadurch gekennzeichnet, dass** die Scheiben (7) parallel und koaxial sind, und um eine Distanz, eine von einer benachbarten Scheibe (7), verschoben sind, die etwas größer ist, als die Dicke des aufgenommenen Schellenbandes (5).

4. Doppelschelle (1) gemäß einem der Ansprüche 2 und 3, **dadurch gekennzeichnet, dass** mindestens eine der Scheiben (5) mindestens eine elastische Erhebung (17) aufweist, die mit leichtem Druck gegen das Schellenband (5) anliegt.

5. Doppelschelle (1) gemäß einem der Ansprüche 2 bis 4, **dadurch gekennzeichnet, dass** die Brücken (9) nahe oder anliegend an dem Umfang der Scheiben (7) angeordnet sind.

6. Doppelschelle (1) gemäß einem der Ansprüche 2 bis 5, **dadurch gekennzeichnet, dass** sich die Brücken (9) auf den Scheiben (7) diametral gegenüberliegen.

7. Doppelschelle (1) gemäß einem der Ansprüche 2 bis 6, **dadurch gekennzeichnet, dass** die Brücken (9) paarweise von unten nach oben auf den Scheiben (7) ausgerichtet sind.

8. Doppelschelle (1) gemäß einem der Ansprüche 2 bis 7, **dadurch gekennzeichnet, dass** die Brücken (9) einen nach innen gedrehten Keilabschnitt (11), dessen Seiten (15) so geschnitten sind, dass sie jeweils eine Seite des Schellenbandes (5) als Drehanschlag aufnehmen können, und einen Abschnitt haben, der als Kreisbogen (13) nach außen ausgebildet ist.

9. Doppelschelle (1) gemäß einem der Ansprüche 2 bis 8, **dadurch gekennzeichnet, dass** der Durchmesser der Scheiben (7) und auch der Abstand der Brücken (9) als Funktion der Größe des aufgenommenen Schellenbandes (5) bestimmt werden, damit die zwei Schellenbänder (5) relativ zueinander in einem variablen Winkel drehbar sind.

10. Doppelschelle (1) gemäß einem der vorhergehenden Ansprüche, **dadurch gekennzeichnet, dass** der Körperteil (3) einstückig aus einem synthetischen Material gegossen ist, beispielsweise aus einem Kunststoff, ebenso wie die Schellenbänder (5).

11. Doppelschelle (1) gemäß einem der vorhergehenden Ansprüche, **dadurch gekennzeichnet, dass** die Schellenbänder (5) flexible Bänder sind, die gemäß einem regulären rechteckigen Abschnitt mit einem gerasteten Abschnitt (21) an einem Ende des Bandes (5) geformt sind, mit Eingriff an einem komplementären Rastkopf (19) an dem anderen Ende des Bandes (5).

12. Montageverfahren einer Doppelschelle (1) wie sie in einem der vorhergehenden Ansprüche definiert ist, hinsichtlich des Befestigens von mindestens zwei Elementen (23) aneinander, **dadurch gekennzeichnet, dass** es die folgenden Schritt aufweist:
Hühren jedes Schellenbandes (5) um mindestens ein Element (23), das zu befestigen ist, Einbringen des gerasteten Abschnitts (21) eines Schellenbandes (5) zwischen zwei benachbarte Scheiben (7) der Schelle und zwischen die zwei zugehörigen Brücken (9), in Eingriffbringen des gerasteten Abschnitts (21) mit dem Rastkopf (19) des Schellenbandes (5) und das Ziehen bis zu einer gewünschten Befestigungsstärke.
